# EUROPÄISCHE PATENTANMELDUNG

(11) **EP 3 254 558 A1**
(43) Veröffentlichungstag der Anmeldung: **13.12.2017**
(21) Anmeldenummer: 17175041.7
(22) Anmeldetag: 08.06.2017
(51) Int. Cl.: A01L 3/00, A01L 5/00

(54) **BESCHLAG FÜR EINEN HUF EINES EQUIDEN**

(30) Priorität: 09.06.2016 DE 102016110657
(71) Anmelder: Goodsmith GmbH, 82152 Planegg (DE)
(72) Erfinder: SALOWSKY, Simon, 81375 München (DE); RONCASSAGLIA, Christian, 85716 Unterschleißheim (DE)
(74) Vertreter: Kuhnen & Wacker

(57) **Zusammenfassung**

Die Erfindung betrifft einen Beschlag (10) für einen Huf (15) eines Equiden, insbesondere Pferd, mit einer Grundplatte (11, 24) und wenigstens einem mit der Grundplatte (11, 24) verbundenen Aufzug (12, 13, 14, 28, 29), welcher mittels eines Klettverschlusses mit einer Hufwand des Hufs (15) des Equiden verbunden werden kann. Um eine sichere Verklebung des einen Klettbandes mit der Hufwand zu erreichen, ist der erfindungsgemäße Beschlag dadurch gekennzeichnet, dass der Klettverschluss mit komplementäre Klettbändern (23, 33) ausgebildet ist, von denen zumindest das hufseitige Klettband (33) eine elastische Trägerschicht (34) aufweist.

## Beschreibung

Die Erfindung betrifft einen Beschlag für einen Huf eines Equiden, insbesondere Pferd, mit einer Grundplatte und wenigstens einem mit der Grundplatte verbundenen Aufzug, welcher mittels eines Klettverschlusses mit einer Hufwand des Hufs des Equiden verbunden werden kann.

Ein solcher Beschlag ist aus der DE 197 42 274 A1 bekannt.

Ein gängiger und seit vielen Jahrhunderten eingesetzter Beschlag für Pferde ist das klassische Hufeisen, welches an den Huf des Pferdes genagelt wird. Seit jüngerer Zeit ist es auch bekannt, den Beschlag aus Kunststoff zu fertigen und an den Huf des Pferdes zu nageln oder zu kleben. Diese Hufbeschläge bleiben für eine gesamte Beschlagperiode von einigen Wochen am Huf und werden zum Wechsel vom Huf abgenommen. Der Hufschmied bearbeitet den Huf fachgerecht und bringt einen neuen Beschlag für eine neue Beschlagperiode an.

Bei einem durch Nägel befestigten Beschlag bieten die Löcher eine potentielle Angriffsfläche für Verschmutzungen oder Bakterien. Infektionen können die Folge sein. Auch ist es schon vorgekommen, dass die Hornkapsel des Hufs abgerissen ist. Für geklebte Beschläge werden in der Regel 2-Komponenten-Kleber, wie zum Beispiel Epoxylharz-Kleber verwendet, welche die äußere Hornschicht des Hufs angreifen können. Dadurch entstehen ähnliche Nachteile wie beim Nageln. Diese gängigen Beschläge schränken zudem oftmals die natürliche Funktion des Hufs ein. Darüber hinaus ist es nicht immer erwünscht, das Pferd dauerhaft zu beschlagen.

Aus der WO 00/54577 A1 ist ein Beschlag bekannt, der mechanisch mittels eines Zugbandes reversibel lösbar mit dem Huf ähnlich einer Sandale verbunden werden kann. Die US 1,761,241 zeigt einen Beschlag, dessen Aufzüge an der Innenseite mit Zähnen versehen sind. Mittels Spannschrauben wird der Beschlag über die Aufzüge schraubstockartig mit der Hufwand verspannt. Auch dieser Beschlag ist reversibel lösbar.

Aus der eingangs genannten DE 197 42 274 A1 ist ein Beschlag bekannt, der mittels an den Aufzügen angebrachten Klettverschlüssen an der Hufwand befestigt werden kann. Das eine Klettband wird mittels Klebeband an der Hufwand angeklebt (hufseitiges Klettband), während das andere Klettband an den Aufzügen befestigt ist (aufzugseitiges Klettband). Die Aufzüge sind ihrerseits flexibel und können so von der Hufwand abgezogen werden. Der Beschlag kann auf diese Weise abgenommen werden, wenn er nicht erwünscht ist, und bei Bedarf wieder angebracht werden. Gleichzeitig ist ein reizarmes Klima zwischen Huf und Beschlag geschaffen. Zum Ankleben des Klettbandes an der Hufwand ist ein sehr fester Kleber erforderlich, um Scherkräfte zwischen dem Klettband und der Hufwand aufzunehmen, die aufgrund von Bewegungen/Verformungen in der Hornkapsel (Wachstum der Hornkapsel während er Beschlagperiode und beim Aufsetzten/Abheben des Hufs beim Laufen) auftreten. Solche Kleber sind vergleichsweise aggressiv und können die Hornkapsel angreifen. Oft wird dennoch keine befriedigende, über die gesamte Beschlagperiode sicher haltende Klebung erreicht.

Hiervon ausgehend liegt der Erfindung das Problem zugrunde, einen Beschlag zu schaffen, bei dem eine sichere Verklebung des einen Klettbandes mit der Hufwand erreicht wird.

Zur Lösung dieses Problem ist der erfindungsgemäße Beschlag dadurch gekennzeichnet, dass der Klettverschluss mit komplementäre Klettbändern ausgebildet ist, von denen zumindest das hufseitige Klettband eine elastische Trägerschicht aufweist.

Die elastische Trägerschicht kann aufgrund ihrer Elastizität den Bewegungen/Verformungen der Hornkapsel und damit der Hufwand folgen. Damit wird der Klebstoff gleichsam elastisch entkoppelt bzw. entlastet. Scherkräfte auf den Klebstoff werden minimiert, wenn nicht sogar ganz vermieden. Dabei ist es von Vorteil, wenn die Trägerschichten beider Klettbänder elastisch sind, da durch den Klett der Klettbänder Scherkräfte übertragen werden könnten, so dass ein steifes aufzugseitiges Klettband die Elastizität des hufseitigen Klettbandes aufheben könnte.

Soweit die Verbindung des aufzugseitigen Klettbandes mit dem eigentlichen Aufzug elastisch genug ist Scherkräfte zu absorbieren, kann der eigentliche Aufzug selber steif ausgebildet werden. Vorzugsweise ist nach einer Weiterbildung der Erfindung jedoch vorgesehen, dass der wenigstens eine Aufzug mit einer elastischen Kunststofflasche, insbesondere aus Chloropren-Kautschuk (Neopren^{®}) oder einem Polyurethan- (PU-) Material, ausgebildet ist. Die Kunststofflasche kann dann ebenfalls den Bewegungen/Verformungen der Hornkapsel folgen und trägt damit ihrerseits zur elastischen Entkopplung/Entlastung bei. Der Aufzug ist dann insgesamt so elastisch, das selbst bei einer steifen Verbindung zwischen Kunststofflasche und der zugehörigen Trägerschicht keine und zumindest nur sehr geringe Scherkräfte auf die Klebstoffschicht zwischen Hufwand und der zugehörigen Trägerschicht auftreten. Beschädigungen der Hornkapsel beim "Beschlagen", Abnehmen und Wiederanbringen werden vermieden.

Auch die Klettverbindung selbst muss eine feste Verbindung gewährleisten, um den Beschlag sicher am Huf zu halten. Dadurch ist die Verbindung jedoch nur schwer abzulösen. Nach einer auch unabhängig vom erfindungsgemäßen Beschlag anderweitig einsetzbaren Weiterbildung der Erfindung wird deshalb ein Klettverschluss verwendet, der zumindest in einem Bereich eines äußeren Randes leichter lösbar ist und im Übrigen einen festen Halt gewährleistet. Es wird sozusagen ein 2-Phasen-Klettverschluss verwendet, der sich zumindest an einem Bereich seines Randes leicht ablösen lässt. Über einen gewissen Randbereich kann der Klettverschluss also am Rand leicht geöffnet bzw. abgeschält werden, so dass sich auch der übrige festsitzende Bereich des Klettverschlusses leichter ablösen lässt. Der Beschlag lässt sich dadurch leichter vom Huf abnehmen. Wie gesagt ist die Anwendung dieses 2-Phasen-Klettverschlusses nicht auf den erfindungsgemäßen Hufbeschlag beschränkt, sondern lässt sich überall dort einsetzen, wo eine feste Verbindung gefordert ist, die sich dennoch einigermaßen leicht wieder öffnen lässt.

Die aus dem oben genannten Stand der Technik bekannten Beschläge sind relativ steif, so dass die natürlichen Huffunktionen nicht unterstützt werden. Der Huf des Pferdes besteht aus tragenden, stützenden und polsternden Elementen. Nur durch das Zusammenspiel von allen Elementen, ist es der Hufkapsel möglich, sowohl horizontale als auch vertikale Bewegungen (Hufmechanismus) auszuführen, um so den Anforderungen durch das Eigengewicht des Pferdes und durch die Bodengegebenheiten gerecht zu werden. Ein zusätzlicher wichtiger Aspekt in diesem Zusammenhang ist die Funktion jedes einzelnen Hufes als Huf-Pumpe durch den Strahl des Hufs, der als zusätzliches Herz wirkt. Durch jeden einzelnen Bodenkontakt (Druck und Entlastung) von Hufballen und Hufstrahl wird der Blut- und Enzymkreislauf in Gang gehalten. Ballen und Strahl funktionieren wie eine Art Saugpumpe. Man spricht in diesem Zusammenhang von den fünf Herzen des Pferdes. Diese Huffunktion wird ebenfalls durch zu steife Beschläge nicht mehr unterstützt. Oft bekommt der Strahl gar keinen Bodenkontakt mehr.

Einem ebenfalls unabhängig denkbaren Aspekt der Erfindung liegt daher das Problem zugrunde, einen Hufbeschlag der eingangs genannten Art derart weiterzubilden, dass er die natürliche Funktion besser unterstützt.

Zur Lösung dieses Problems ist der Beschlag nach diesem Aspekt dadurch gekennzeichnet, dass die Grundplatte mehrlagig mit wenigstens einem elastischen Mantel, in welchem ein elastischer Kern aufgenommen ist, und einer Trittlage, die auf der dem Huf abgewandten Seite des elastischen Mantels angeordnet ist, ausgebildet ist.

Durch den elastischen Mantels und Kern kann der Beschlag den natürlichen Bewegungen des Hufs beim Laufen des Pferdes folgen. Der Beschlag reagiert flexibel auf beidseitig horizontale Belastungen, gegenläufige vertikale Belastungen und einseitige vertikale Belastungen. Die natürlichen vertikalen und horizontalen Bewegungen der Hufkapsel werden nicht eingeschränkt, sondern im Gegenteil die natürlichen Bewegungen der Hufkapsel führend unterstützt. Ausgeübter einseitiger Druck auf die Hornkapsel durch unterschiedliche Bodenverhältnisse wird gleichmäßig auf die gesamte Hornkapsel verteilt und sorgt im Wandbereich für Stabilität. Auch der Saugpumpeneffekt ("fünf Herzen") bleibt erhalten. Der Blut- und Enzymkreislauf bleibt erhalten und benötigte Flüssigkeit wird in den Sehnenscheiden gedrückt. Der Huf erhält dennoch die nötige Stabilität. Die Trittlage schützt den elastischen Mantel vor Verschleiß, bietet dem Pferd Halt und unterstützt gleichzeitig die natürlichen Dreh- und Gleiteigenschaften des natürlichen Hufes.

Insgesamt empfindet das Pferd den Beschlag nicht als Fremdkörper am Huf, da die natürlichen Huffunktionen konsequent umgesetzt sind und der Beschlag sehr leicht ist. Es ist ein reizarmes Klima zwischen Huf und Beschlag geschaffen. Der Beschlag kann sehr flach ausgeführt werden, so dass das natürliche Gangbild des Pferdes durch zu hohen Beschlag nicht verändert wird. Eine Umstellung auf Hufe ohne Beschlag ("barfuß") ist problemlos möglich.

Vorzugsweise ist der Kern aus einem faserverstärkten Kunststoff hergestellt. Besonders bevorzugt wird ein carbonfaserverstärkter Kunststoff verwendet. Dieses Material ist bei sehr geringem Gewicht und hoher Festigkeit sehr elastisch. Dadurch ist es in der Lage, die natürlichen Huffunktionen besonders gut zu unterstützen.

Nach einer Weiterbildung der Erfindung ist der Mantel aus einem Polyurethan hergestellt. Vorzugsweise wird ein transparentes Polyurethan verwendet. Das Polyurethan kann zusätzlich oder alternativ antibakteriell wirken, wodurch das Klima zwischen Huf und Beschlag besonders reizarm ist.

Der Mantel kann zusätzlich mit Mitteln gegen Rutschen, insbesondere mit Antirutschnoppen oder Stollen versehen sein. Der Mantel erhält so eine strukturierte Huf Auflagefläche, welche nicht nur der Stabilität dient, sondern auch die Tastfähigkeit des Hufs fördert und für ein gesundes Hornwachstum sorgt. Die Antirutschnoppen oder Stollen sollten dabei härter als die Hornkapsel des Hufs sein, um einen besonders guten Halt zu bieten. Auch werden die Tastfähigkeit des Hufs und ein gesundes Hornwachstum gefördert.

Nach einer anderen Weiterbildung der Erfindung ist oberhalb des Kerns und/oder unterhalb des elastischen Kerns im Bereich von dessen Scheitel ein Stabilisator angeordnet. Der Beschlag wird dadurch an seinem Scheitel, also im Bereich der vorderen Spitze des Hufs, versteift, was der Stabilität dient ohne die Elastizität des Beschlags in einer Weise einzuschränken, die einen nachteiligen Effekt auf die natürlichen Huffunktionen hätte. Der Stabilisator bzw. die Stabilisatoren können aus Metall, hergestellt sein. Vorzugsweise wird ein rostfreies Metall, besonders bevorzugt rostfreier Stahl oder Titan, verwendet. Auch andere Materialien, insbesondere steife Kunststoffe kommen in Betracht. Der Stabilisator kann nach vorne hin am Scheitelpunkt verbreitert sein, um einer Deformation des Mantels durch das ständige natürliche Abrollverhalten des Hufs im vorderen (Zehen-) Bereich entgegenzuwirken.

Nach einer anderen Weiterbildung der Erfindung sollte die Grundplatte hufeisenförmig ausgebildet und im inneren mit einem Polster versehen sein. Hierdurch werden die natürlichen Huffunktionen weiter unterstützt.

Ferner kann der Beschlag auch mit einer geschlossenen Form gebildet sein, welche eine Unterstützung für den Strahl des Hufs aufweist. Auch dieses unterstützt die natürlichen Funktionen, insbesondere den Saugpumpeneffekt.

Ferner kann der elastische Kern an seiner Außenseite mit einem innerhalb des Mantels angeordneten, mindestens zweifarbigen Ringsystem umgeben sein. Dieses Ringsystem dient gleichsam als Ampel beim Anpassen der Grundplatte an den Huf des Pferdes. Außen kann demnach zum Beispiel ein grüner, dann ein gelber und schließlich an der zum Kern weisenden Innenseite ein roter Ring vorgesehen werden. Zum Anpassen der Grundplatte kann nun der Mantel soweit abgeschliffen werden, bis maximal der rote Ring erreicht ist. Auch kann das Ringsystem durch den transparenten Mantel hindurch gesehen werden, so dass schon vor dem Anpassen erkannt werden kann, ob nicht auf eine nächst kleinere Grundplatte gewechselt werden sollte.

Die Erfindung wird nachfolgend anhand eines in der Zeichnung dargestellten Ausführungsbeispiels näher erläutert. In dieser zeigen:
Fig. 1 einen Beschlag nach einem ersten Ausführungsbeispiel mit den Erfindungsmerkmalen in perspektivischer Darstellung,
Fig. 2 einen Beschlag nach einem zweiten Ausführungsbeispiel mit den Erfindungsmerkmalen in einer Vorderansicht,
Fig. 3 eine Grundplatte für einen Beschlag nach einem weiteren Ausführungsbeispiel mit den Erfindungsmerkmalen in perspektivischer Darstellung,
Fig. 4 den Beschlag mit einer ersten Variante von Aufzügen mit den Erfindungsmerkmalen,
Fig. 5 den Beschlag mit einer weiteren Variante von Aufzügen mit den Erfindungsmerkmalen,
Fig. 6 einen Aufzug und ein hufseitiges Klettband mit den Erfindungsmerkmalen im Querschnitt,
Fig. 7 eine schematische Seitenansicht des Aufzugs nach Fig. 6, und
Fig. 8 ein Klettband für den Aufzug nach Fig. 6.

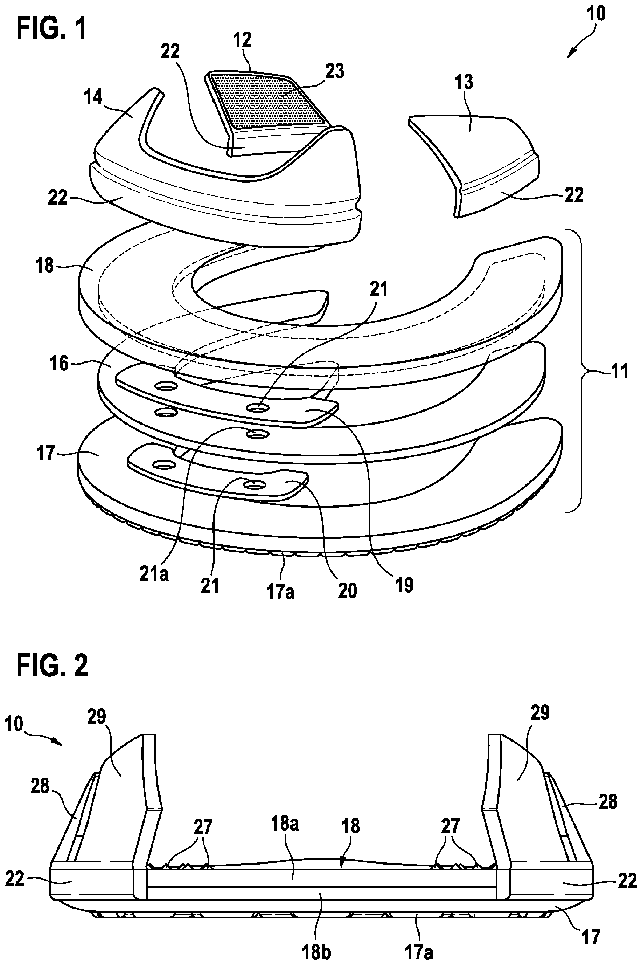

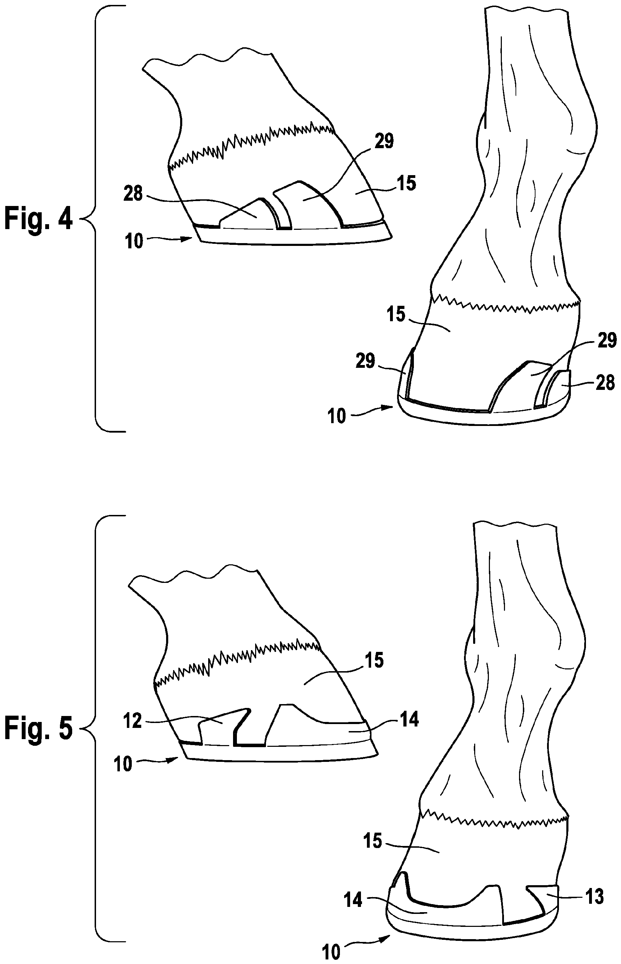

Der in Fig. 1 gezeigte Beschlag 10 weist eine Grundplatte 11 und im vorliegenden Fall drei Aufzüge 12, 13 und 14 auf. Die Aufzüge 12 und 13 sind dabei der Seitenwand des Hufs 15 zugeordnet, während der Aufzug 14 an der Spitze (Scheitelpunkt) des Hufs 15 angeordnet ist (siehe Fig. 4).

Die Grundplatte 11 ist sandwichartig ausgebildet und weist als wesentliche Lagen einen Kern 16, eine Trittlage 17 und einen Mantel 18 auf. Die Trittlage 17 ist aus einem Elastomer hergestellt, wie er zum Beispiel in der Reifenindustrie verwendet wird. Die Trittlage 17 dient als Verschleißschutz und bietet gleichzeitig den nötigen "Grip". Sie kann an ihrer unteren, vom Huf 15 abgewandten Seite (Bodenseite) mit einem geeigneten Profil 17a ausgebildet sein, um diesen "Grip" zu unterstützen.

Der Kern 16 ist aus einem elastischen Material hergestellt, nämlich im konkreten Falle aus einem carbonfaserverstärkten Kunststoff und ist in den Mantel 18 eingebettet. Der Mantel 18 kann zu diesem Zweck schalenartig ausgebildet sein, so dass der Kern 16 und ggf. weitere, weiter unten noch zu beschreibenden Bestandteile der Grundplatte 11 in den Mantel 18 eingelegt werden können. Eine solche Variante ist in Fig. 2 gezeigt. Der Mantel 18 ist hier aus einer Oberschale 18a und einer Unterschale 18b gebildet, die nach Einlegen des Kerns 16 und ggf. der weiteren Bestandteile miteinander verbunden, insbesondere verklebt werden. Der Mantel 18 kann aber auch einlagig ausgebildet und zum Beispiel nach unten (zur Trittlage 17 hin) oder oben (zum Huf 15 hin) offen sein. Alternativ können der Kern 16 und ggf. die weiteren Bestandteile in den Mantel 18 eingegossen sein. In beiden Varianten ist der Mantel 18 vorzugsweise aus einem transparenten Polyurethan hergestellt, der zusätzlich antibakterielle Eigenschaften aufweisen kann.

Weiterhin ist nach den vorliegenden Ausführungsbeispielen wenigstens oberhalb (hufseitig) oder unterhalb (auf der Seite der Trittlage 17) des Kerns 16 ein Stabilisator 19 bzw. 20 als weiterer Bestandteil der Grundplatte 11 angeordnet. Im vorliegenden Ausführungsbeispiel sind zu beiden Seiten des Kerns 16 je ein Stabilisator 19 bzw. 20 vorgesehen. Die Stabilisatoren 19, 20 sind am Scheitel der Grundplatte 11, also im Bereich der vorderen Hufspitze angeordnet. Sie sind aus einem vorzugsweise rostfreiem Metall, insbesondere rostfreiem Stahl oder aus Titan gebildet. Die Stabilisatoren 19, 20 dienen nicht nur der Formbeständigkeit nach Belastung, sondern auch dem Trittschutz, insbesondere bei anspruchsvollen Austritten.

Die einzelnen Lagen der Grundplatte 11 sind auf geeignete Weise miteinander verbunden. Ggf. reicht es auch aus, dass der Kern 16 mit dem/den Stabilisatoren 19 und/oder 20 in den Mantel eingelegt wird. Im vorliegenden Ausführungsbeispiel können die Stabilisatoren 19, 20 mit dem Kern 16 vernietet sein. Hierzu weisen die Stabilisatoren 19, 20 Bohrungen 21 und der Kern 16 komplementäre Bohrungen 21a auf. Die Trittlage 17 kann direkt auf den Mantel 18 aufvulkanisiert werden. Aber auch eine Klebung ist möglich. Bei einem nach unten offenen Mantel 18 verschießt die Trittlage 17 gleichzeitig den Mantel 18.

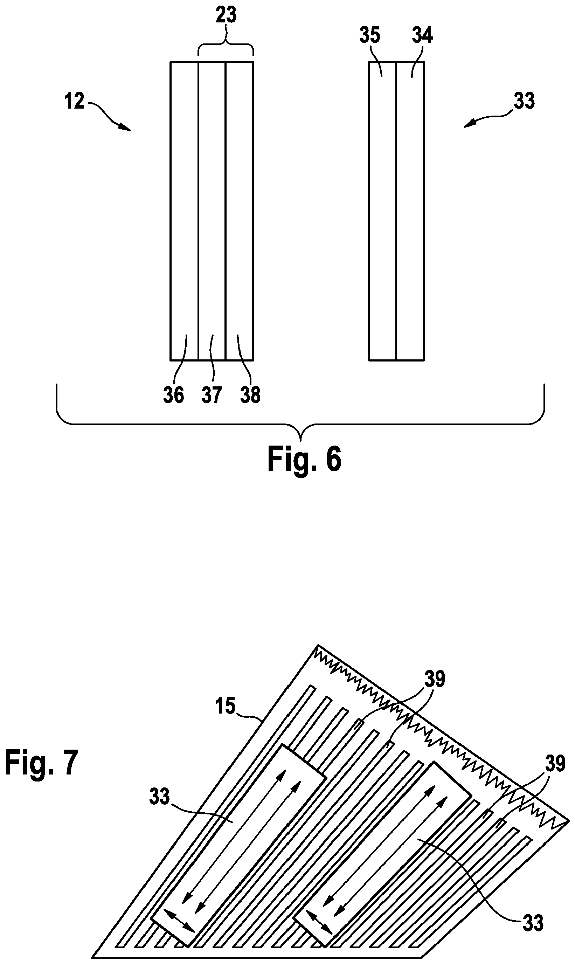

Die Aufzüge 12, 13 und 14 werden an ihren unteren Rändern 22 mit dem äußeren Rand der Grundplatte 11 verbunden, nämlich verklebt. Oberhalb des Randes 22 weist jeder Aufzug 12, 13 und 14 ein Klettband 23 auf. Ein komplementäres Klettband 33 (siehe Fig. 6) ist an der Hufwand befestigt, nämlich geklebt. Mittels des Klettverschluss kann der Beschlag 10 am Huf 15 reversibel lösbar angebracht werden.

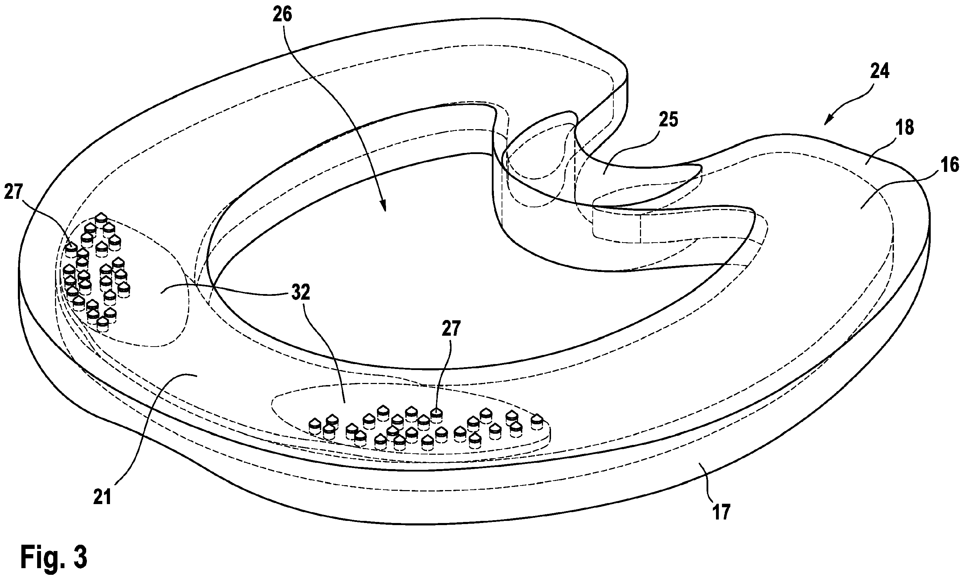

Fig. 1 zeigt einen nach hinten zum Strahl des Hufs 15 hin offenen Beschlag 10, bei dem die Grundplatte 11 hufeisenförmig ausgebildet ist. Demgegenüber ist die Grundplatte 24 nach Fig. 3 geschlossen ausgebildet, indem die freien Enden der Grundplatte 24 durch eine Strahlunterstützung 25 miteinander verbunden sind. Dabei besteht zusätzlich die Möglichkeit, im Inneren 26 der Grundplatte 24 ein Gitter einzugießen, durch welches ein Polster für den Huf 15 oder andere Applikationen aufgenommen werden können. Zum Beispiel kann am inneren Rand der Grundplatte eine Lippe angeordnet werden, die ein Aufstollen (Zusammenballen und Vereisen von Schnee unter dem Huf) bei winterlichen Ausritten verhindert. Im Übrigen ist die Grundplatte 24 gemäß Fig. 3 ähnlich der Grundplatte 11 gemäß Fig. 1 ausgebildet, so dass gleiche Teile mit denselben Bezugszeichen beziffert sind.

Um dem Huf 15 einen besseren Halt auf der Grundplatte 11, 24 zu bieten und insbesondere ein Verdrehen des Hufs 15 auf der Grundplatte 11, 24 zu minimieren, kann die Grundplatte 11, 24 an ihrer dem Huf 15 zugewandten Oberseite Noppen oder Stollen 27 aufweisen (Fig. 2 und 3). Diese sollten so angeordnet sein, dass sie auf die unempfindlichen Randschichten des Wand- und Sohlenhorns wirken. Bei empfindlichen Pferden können die Noppen oder Stollen 27 auch optional stumpfer geschliffen werden oder die Zahl der Noppen oder Stollen 27 reduziert werden.

Die Noppen oder Stollen 27 können in die Grundplatte 11, 24, konkret in den Mantel 18 eingefasst sein. Vorteilhafter ist aber, die Noppen oder Stollen 27 an einer gemeinsamen Basisplatte 32 (Fig. 3) anzuordnen und durch korrespondierende Bohrung im Mantel 18 zu führen. Die Basisplatte 32 kann einstückig mit den Noppen oder Stollen 27 ausgebildet sein. Alternativ können die Noppen oder Stollen 27 (vergleichbar den Stollen am Fußballschuh) in die Basisplatte 32 oder direkt in den Mantel 18 eingeschraubt werden. Auch ist es möglich, die Noppen oder Stolen 27 statt im Mantel 18 in die Trittlage 17 einzulassen.

Die Noppen oder Stollen 27 geben den nötigen Grip in nicht alltäglichen Beanspruchungssituationen. Das Material für die Noppen oder Stollen 27 sollte daher härter als die Hornkapsel des Hufs 15 sein, um den festen Halt des Hufs 15 zu unterstützen.

Die zum Huf 15 weisende Oberfläche des Mantels 18 kann zusätzlich oder alternativ zu den Noppen oder Stollen 27 leicht uneben strukturiert sein. Hierdurch soll die Tastfähigkeit des Hufes 15 durch unterschiedliche Druckreize angeregt werden, um somit vor allem die intramuskuläre Koordination zu schulen. Dies bedeutet ein minimiertes Verletzungsrisiko durch die Bewältigung von Bewegungsabläufen bei sich plötzlich ändernden Bodenbeschaffenheiten.

Die Fig. 4 und 5 zeigen zwei sich hinsichtlich ihrer Aufzüge unterscheidende Beschläge 10. Der Beschlag 10 nach Fig. 4 weist Aufzüge 28 und 29 auf, die "zehenfrei" sind (siehe auch Fig. 2), während der Beschlag 10 nach Fig. 5 die Aufzüge 12, 13 und 14 nach Fig. 1 aufweist. Der vordere Aufzug 14 geht über die Spitze des Hufs 15 hinweg.

Die Befestigung des Beschlags 10 am Huf 15 soll reversibel lösbar und gleichzeitig fest sein. Hierfür bietet sich ein Klettverschluss an, der den Aufzügen 12, 13, 14; 28, 29 zugeordnet ist, so dass der Beschlag 10 über die Aufzüge 12, 13, 14; 28, 29 an der Hufwand befestigt werden kann. Aufgrund von Bewegungen der Hufwand einerseits durch das Auftreten beim Laufen und anderseits durch das Wachstum der Hornkapsel treten Scherkräfte zwischen der Hornkapsel, konkret der Hufwand, und den Aufzügen 12, 13, 14; 28, 29 auf. Daher ist der Klettverschluss ebenfalls in besonderer Weise ausgebildet, so dass er auch unabhängig von den erfindungsgemäßen Grundplatten 11, 24 mit anderen Grundplatten eingesetzt werden kann, ebenso wie die vorstehend beschriebenen Grundplatten 11, 24 auch mit anderen Aufzügen einsetzbar sind.

Einen Querschnitt durch einen Aufzug 12, der vorliegend nur als Beispiel ausgewählt ist, und eine zugehöriges hufseitiges Klettband 33 zeigt Fig. 6. Die übrigen Aufzüge 13, 14; 28, 29 sind entsprechend ausgebildet.

Das hufseitige Klettband 33 weist eine elastische Trägerschicht 34 und einen Klett 35 auf. Der Aufzug 10 weist eine flexible Kunststofflasche 36 und das Klettband 23 auf, welches seinerseits wieder aus einer elastischen Trägerschicht 37 und einem zu dem Klett 35 komplementären Klett 38 gebildet ist. Es ist bevorzugt, dass dem hufseitigen Klettband 33 der Hakenklett und dem Aufzug 10 der Flauschklett zugeordnet ist.

Das hufseitige Klettband 33 wird mit der Hufwand verklebt. Um nun die Scherkräfte auf diese Verklebung gering zu halten oder möglichst gar ganz zu vermeiden, ist die elastischen Trägerschichten 34 elastisch, so dass sie den oben beschriebenen Bewegungen der Hufwand möglichst problemlos folgen kann. Bevorzugt ist auch die Trägerschicht 37 der Kunststofflasche 36 elastisch, insbesondere, wann die Klett 35, 38 zwischen dein beiden Trägerschichten 34, 37 Scherkräfte übertragt und nicht ausgleichen kann. Besonders vorteilhaft ist es, wenn die Trägerschichten 34, 37 und die Kunststofflasche 36 an die Bewegungsrichtungen innerhalb der Hufwand angepasst sind. Dieses wird anhand der rein schematischen Darstellung in Fig. 7 näher erläutert:

Die Hornkapsel des Hufs 15 ist gleichsam einer Struktur aus Röhren 39 gebildet. Die einzelnen Röhren 39 sind im vorderen Bereich steiler und im hinteren Bereich flacher ausgebildet. Die Winkeldifferenz zwischen den vorderen und hinteren Röhren 39 beträgt ca, 5° bis 7°. Beim Wachsen "verlängert" sich die Hornkapsel des Hufs 15 im Wesentlichen in Längsrichtung der Röhren 39. Auch beim Auftreten und Abheben des Hufs 15 durch das Laufen "verkürzen" bzw. "verlängern" sich die Röhren 39 elastisch, wobei es aber auch zu einer gewissen "Verschiebung" der Röhren 39 gegeneinander und zu Bewegungen quer zur Längsachse der Röhren kommen kann und in der Regel auch kommt. Um den Kleber gleichsam elastisch zu entkoppeln, sind die Trägerschichten 34 und 37, aber auch die Kunststofflasche 36 nun so elastisch beschaffen, dass sie diesen Bewegungen folgen können und dabei Scherkräfte auf die Klebstoffschicht bzw. den Klebestreifen, mit welchem das hufseitige Klettband 33 mit der Hufwand verklebt ist, minimieren oder gar ausschließen. Versuche haben ergeben, dass als Material für die Kunststofflasche 36 ein ist Cloropren-Kautschuk (Neopren^{®}) oder ein PU-Material als besonders geeignet sind. Letztes hat den weiteren Vorteil, dass es kostengünstig im 3-D-Druckverfahren verarbeitbar ist.

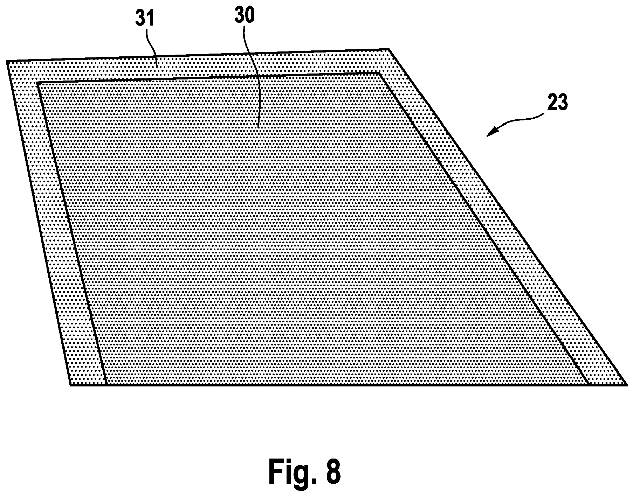

Der Klettverschluss muss ferner in sich sehr fest ausgebildet sein, um einen sicheren Halt des Beschlags 10 am Huf 15 zu bieten. Auf der anderen Seite soll sich der Klettverschluss leicht öffnen lassen, damit sich der Beschlag 10 leicht vom Huf 15 abnehmen lässt. Letzteres geht aber wiederum zu Lasten des sicheren Halts. Um diesen Zielkonflikt aufzulösen, ist der Klettverschluss in besonderer Weise ausgebildet, was ihn auch für andere Anwendungsfälle interessant macht. Dieses wird nachfolgend anhand des an den Aufzügen angebrachten und in Fig. 8 näher gezeigten Klettbandes 23 erläutert:
Im Kern 30, das heißt über seine wesentliche Fläche ist das Klettband 23 mit einem dichten und damit sehr festhaltenden Klett versehen. Ein äußerer Rand 31 ist mit einem loseren und damit nicht so festhaltenden Klett versehen. Das an der Hufwand angeklebte komplementäre Klettband ist analog ausgebildet. Zum Lösen der Aufzüge von der Hufwand wird das Klettband 23 nun zunächst am Rand 31 ergriffen und lässt sich dort vergleichsweise leicht ablösen. Damit ist es bereits über einen gewissen Bereich abgeschält, so dass nun auch der festsitzende Kern 30 erleichtert gelöst werden kann.

Im Ausführungsbeispiel gemäß Fig. 8 ist der gesamte äußere Rand 31, soweit er nicht durch die Grundplatte 11 bzw. 24 ohnehin zugänglich ist, als Bereich zum erleichterten Lösen, also mit nicht zu dichtem Klett ausgebildet. Je nach Anwendungsfall kann sich dieser Bereich aber auch nur auf eine Kante oder eine Ecke des Klettbandes beschränken. Auch kann seine Ausdehnung variieren.

Die vorliegende Erfindung ist anhand konkreter Ausführungsbeispiele beschrieben worden. Es versteht sich, dass einzelne Merkmale dieser Ausführungsbeispiele auch untereinander ausgetauscht oder miteinander kombiniert werden können. So ist es insbesondere vorgesehen, dass auch die Grundplatte 11 an ihrer hufseitigen Oberseite mit Noppen oder Stollen 27 versehen ist.

### Bezugszeichenliste:

- 10: Beschlag
- 11: Grundplatte
- 12: Aufzug
- 13: Aufzug
- 14: Aufzug
- 15: Huf
- 16: Kern
- 17: Trittlage
- 18: Mantel
- 19: Stabilisator
- 20: Stabilisator
- 21: Bohrung
- 21a: Bohrung
- 22: Rand
- 23: Klettband
- 24: Grundplatte
- 25: Strahl Unterstützung
- 26: Inneres
- 27: Noppen/Stollen
- 28: Aufzug
- 29: Aufzug
- 30: Kern
- 31: Rand
- 32: Basisplatte
- 33: Klettband
- 34: Trägerschicht
- 35: Klett
- 36: Kunststofflasche
- 37: Trägerschicht
- 38: Klett
- 39: Röhre

## Patentansprüche

1. Beschlag (10) für einen Huf (15) eines Equiden, insbesondere Pferd, mit einer Grundplatte (11, 24) und wenigstens einem mit der Grundplatte (11, 24) verbundenen Aufzug (12, 13, 14, 28, 29), welcher mittels eines Klettverschlusses mit einer Hufwand des Hufs (15) des Equiden verbunden werden kann, **dadurch gekennzeichnet, dass** der Klettverschluss mit komplementäre Klettbändern (23, 33) ausgebildet ist, von denen zumindest das hufseitige Klettband (33) eine elastische Trägerschicht (34) aufweist.

2. Beschlag (10) nach Anspruch 1, **dadurch gekennzeichnet, dass** beide Klettbänder (23, 33) eine elastischen Trägerschicht (34, 37) aufweisen.

3. Beschlag (10) nach Anspruch 1 oder 2, **dadurch gekennzeichnet, dass** der wenigstens eine Aufzug (12, 13, 14, 28, 29) mit einer elastischen Kunststofflasche (36), insbesondere Chloropren-Kautschuk (Neopren^{®}) oder einem PU-Material, ausgebildet ist.

4. Beschlag (10) nach einem der Ansprüche 1 bis 3, **dadurch gekennzeichnet, dass** der Klettverschluss zumindest in einem Bereich eines äußeren Randes (31) leichter lösbar und im Übrigen (30) mit festerem Halt ausgebildet ist.

5. Beschlag nach einem der Ansprüche 1 bis 4, **dadurch gekennzeichnet, dass** die Grundplatte (11, 24) mehrlagig mit wenigstens einem elastischen Mantel (18), in welchem ein elastischer Kern (16) aufgenommen ist, und einer Trittlage (17), die auf der dem Huf (15) abgewandten Seite des elastischen Mantels (18) angeordnet ist, ausgebildet ist.

6. Beschlag (10) nach Anspruch 5, **dadurch gekennzeichnet, dass** der elastische Kern (16) aus einem faserverstärkten, insbesondere carbonfaserverstärkten, Kunststoff gebildet ist.

7. Beschlag (10) nach Anspruch 5 oder 6, **dadurch gekennzeichnet, dass** der Mantel (18) aus, insbesondere transpatentem und/oder antibakteriellem, Polyurethan gebildet ist.

8. Beschlag (10) nach einem der Ansprüche 6 bis 7, **dadurch gekennzeichnet, dass** der Mantel hufseitig zumindest bereichsweise mit einem Mittel gegen Rutschen, insbesondere mit Antirutschnoppen oder Stollen (27), versehen ist.

9. Beschlag (10) nach Anspruch 8, **dadurch gekennzeichnet, dass** die Antirutschnoppen oder Stollen (27) härter als die Hornkapsel des Hufs (15) sind.

10. Beschlag (10) nach einem der Ansprüche 5 bis 9, **dadurch gekennzeichnet, dass** oberhalb des Kerns (16) und/oder unterhalb des elastischen Kern (16) im Bereich von deren Scheitel ein Stabilisator (19, 20), insbesondere aus, vorzugsweise rostfreiem, Metall, besonders bevorzugt aus rostfreiem Stahl oder Titan, angeordnet ist.

11. Beschlag (10) nach einem der Ansprüche 5 bis 10, **dadurch gekennzeichnet, dass** die Grundplatte (11) hufeisenförmig ausgebildet und im Inneren mit einem Polster versehen ist.

12. Beschlag nach einem der Ansprüche 5 bis 11, **dadurch gekennzeichnet, dass** die Grundplatte (24) geschlossen und mit einer Unterstützung (25) für den Strahl des Hufs (15) ausgebildet ist.

13. Beschlag (10) nach einem der Ansprüche 5 bis 12, **dadurch gekennzeichnet, dass** der elastische Kern (16) an seiner Außenseite mit einem innerhalb des Mantels (18) angeordneten, mindestens zweifarbigen Ringsystem umgeben ist.
